(19)

**Europäisches Patentamt**
**European Patent Office**
**Office européen des brevets**

(11)  **EP 4 730 765 A1**

(12)  **EUROPEAN PATENT APPLICATION**

(43) Date of publication:
 **22.04.2026  Bulletin 2026/17**

(21) Application number: **25191202.8**

(22) Date of filing: **23.07.2025**

(51) International Patent Classification (IPC):
 ***H04N 13/128*** (2018.01)   ***H04N 13/139*** (2018.01)
 ***H04N 13/239*** (2018.01)   ***H04N 13/344*** (2018.01)
 ***H04N 23/69*** (2023.01)

(52) Cooperative Patent Classification (CPC):
 **H04N 13/239; G02B 27/017; H04N 13/128;**
 **H04N 13/139; H04N 13/344; H04N 23/69;**
 G02B 2027/0138; G02B 2027/014

(84) Designated Contracting States:
 **AL AT BE BG CH CY CZ DE DK EE ES FI FR GB**
 **GR HR HU IE IS IT LI LT LU LV MC ME MK MT NL**
 **NO PL PT RO RS SE SI SK SM TR**
 Designated Extension States:
 **BA**
 Designated Validation States:
 **GE KH LA MA MD TN**

(30) Priority: **21.10.2024  CN 202411464337**

(71) Applicant: **Dalian Situne Technology Co., Ltd**
 **Dalian City, Liaoning Province 116023 (CN)**

(72) Inventor: **PAN, JONG-GUANG**
 **Beijing, 100102 (CN)**

(74) Representative: **Cabinet Chaillot**
 **16/20, avenue de l'Agent Sarre**
 **B.P. 74**
 **92703 Colombes Cedex (FR)**

(54)  **METHOD FOR PROCESSING ENVIRONMENTAL IMAGE DATA IN VIDEO SEE-THROUGH (VST), HEAD-MOUNTED DISPLAY DEVICE, AND STORAGE MEDIUM**

(57)   The method of processing environment image data, and products related thereto, are applicable to extended reality head-mounted display having at least two cameras to capture real world images which are displayed to user through display screens. In response to user's zoom-in command, a target pixel T is determined based on a vertical perpendicular distance Z between the target pixel T and the mixed reality head-mounted display, and then calculating $X_{old}$; a new vertical perpendicular distance $Z_{new}$ is obtained after target pixel T is zoomed in, and then calculating $X_{new}$; magnifying the images on the display screens by $(X_{new}/X_{old})$ times, and then translating each pixel of the magnified images on the display screens simultaneously by a same distance as how parallax viewing positions on the display screens translate when $X_{old}$ is changed to $X_{new}$ when the target pixel T is zoomed in.

FIG.3

**Description**

TECHNICAL FIELD

The present invention belongs to the field of video see-through technology, specifically relating to a method for processing environmental image data in video see-through (VST), a head-mounted display device, and a storage medium.

BACKGROUND OF THE INVENTION

Extended reality (XR) glasses are divided into two categories: AR (augmented reality) glasses and VR (virtual reality) glasses. AR glasses are usually implemented by using Optical See-Through (OST) technology or optical lenses to view the surrounding environment (hereinafter referred to as optical see-through OST). VR glasses are purely virtual devices that cannot view the external environment. In recent years, MR (mixed reality) glasses have emerged, where cameras are used in VR glasses to view the surroundings through Video See-Through (VST) technology (or alternatively referred to as Visual Pass-Through technology). Since OST does not capture environmental images or video streams, it cannot process environmental videos or images. In contrast, VST uses cameras to capture environmental images or video streams, allowing computational processing and post-processing of the surrounding environment in the captured images or video streams. Beyond rendering custom virtual objects and backgrounds as display contents, a metaverse further requires the ability to post-process the surrounding environment in the captured images or video streams.

On traditional tablets and smartphones, users can freely zoom in and out of images or video streams by using two fingers. Features such as zoom in/out or adjusting the focus distance (f) are already available during video recording. With technological advancements, MR glasses will gradually become extensions of human vision, enabling users to magnify distant or small objects. On 2D screens, zoom in/out functions are easily implemented because they do not involve parallax issues-zooming in and out equate to simply scaling images or video streams. However, in a pair of MR glasses, zooming in and out is not simply scaling images or video streams. While scaling images or video streams is straightforward, zooming in and out require adjusting the parallax between the left and right eyes. Currently, traditional MR glasses lack methods for post-processing environmental image data in VST to achieve zoom in/out effects.

BRIEF SUMMARY OF THE INVENTION

It is an object of the present invention is to provide a method for processing environmental image data in video see-through (VST), a head-mounted display device, and a storage medium. The present invention is applicable to systems of MR (Mixed Reality) head-mounted display devices. Based on user's interactive commands, the method of the present invention performs post-processing of the environmental image data in VST, enabling immersive viewing of the surrounding environment being zoomed in or out through VST. This allows users to magnify and observe distant or very small objects, and achieves the visual perception of objects being zoomed in or out.

A method for processing environmental image data in video see-through, applicable to a system of a mixed reality head-mounted display; at least two cameras of the system corresponding to two eyes of a user capture real environment images, which are displayed and viewed on a left screen and a right screen of the mixed reality head-mounted display; based on user's interactive commands, the system post-processes the real environment images to create visual effects of zooming in/out of objects within the real environment images; the interactive commands include preset zoom-in and zoom-out commands; the system predicts a zoom distance based on the interactive commands; the system post-processes the real environment images according to the following steps:

step 1: in response to a zoom-in command given by the user who views the real environment images through VST, determining a target pixel T based on a distance Z which is a vertical perpendicular distance between the target pixel T and the mixed reality head-mounted display, wherein a pixel closest to one end of said distance Z opposite another end thereof at the mixed reality head-mounted display is defined as the target pixel T; step 1 comprises the following steps:

assuming the left screen and the right screen of the mixed reality head-mounted display align pixels based on field of view (FOV) of a left camera and a right camera of the system respectively, a total number of pixels of an image captured by a respective one of the left camera and right camera is equal to a total number of screen pixels of a respective one of the left screen and the right screen either with or without correction; given that a total number of pixels along an X-axis of a respective one of the left screen and the right screen is $X_{total}$, the FOV of the left camera and the right camera is known, an interpupillary distance ($D_{IPD}$) between the left camera and the right camera is known, and let a pixel per degree (PPD) being PPD = $X_{total}$ / FOV; using point L to represent a center point of the left screen and a center point of the left camera simultaneously, and using point R to represent a center point of the right screen and a center point of the right camera simultaneously, a line connecting said point L and said point R or a line parallel to the line connecting said point L and said point R is defined as the X-axis; establishing XY coordinate systems on the left screen and the right screen respectively, with said point L and said point R being origins of the XY coordinate systems respectively; wherein on the left screen, a distance on an imaging plane of the left screen between a point corresponding to perpendicular projection of said point L on the imaging plane of the left screen and a parallax viewing position according to which the target pixel T is viewed is defined as $X_L$, and on the right screen, a distance on an imaging plane of the right screen between a point corresponding to perpendicular projection of said point R on the imaging plane of the right screen and a parallax viewing position according to which the target pixel T is viewed is defined as $X_R$; values of said $X_L$ and said $X_R$ are represented on the left screen and on the right screen respectively as pixel values; as an object as viewed from the left screen and the right screen is zoomed in, the parallax viewing positions on the left screen and the right screen move along or parallel to the X-axis symmetrically from said point L and said point R towards a center of the mixed reality head-mounted display; a normal line passing perpendicularly through the X-axis at said point L is defined as a left central line, and a normal line passing perpendicularly through the X-axis at said point R is defined as a right central line; an angle between the left central line and a line passing through said point L and the parallax viewing position on the left screen according to which the target pixel T is viewed as defined as $\theta_L$; an angle between the right central line and a line passing through said point R and the parallax viewing position on the right screen according to which the target pixel T is viewed as defined as $\theta_R$; in the real world, D is used to represent values of how much a perpendicular projection point of the target pixel T onto the X-axis is distanced from said point L and said point R, wherein a normal line extending from the target pixel T and intersecting perpendicularly with the X-axis divides D into $D_L$ and $D_R$, wherein $D_L$ is a distance between said point L and an intersection point of the X-axis and the normal line extending from the target pixel T and intersecting perpendicularly with the X-axis, and $D_R$ is a distance between said point R and the intersection point of the X-axis and the normal line extending from the target pixel T and intersecting perpendicularly with the X-axis; defining $D_L+D_R=D_{IPD}$, wherein $D_{IPD}$ is the interpupillary distance between the left camera and the right camera and also a fixed known distance between said point L and said point R; during zoom in/out process of the target pixel T, $D_L$ and $D_R$ remain unchanged;

scanning row by row a left image and a right image captured by the left camera and the right camera respectively, comparing all pixels in each row to find pixels in the left image and the right image with identical depth information or grayscale colors and consistent positional arrangements; obtaining values of $X_L$ and $X_R$ of each of these pixels, and then calculate for each of these pixels:

$$\theta_L = X_L / PPD \text{ ,}$$

and

$$\theta_R = X_R / PPD \text{ ,}$$

as well as the distance Z according to the following formula:

$$Z = \frac{D_{IPD}}{TAN(\theta_L) + TAN(\theta_R)} \text{ ;}$$

defining the pixel closest to said one end of said distance Z opposite said another end thereof at the mixed reality head-mounted display as the target pixel T, which is currently at an original position; said target pixel T at said original position is defined as $T_{old}$; saving original position data of $T_{old}$, wherein said original position data of $T_{old}$ includes a value of $X_L$ corresponding to $T_{old}$, defined as $X_{old\text{-}left}$, a value of $\theta_L$ corresponding to $T_{old}$, defined as $\theta_{old\text{-}left}$, a value of $X_R$ corresponding to $T_{old}$, defined as $X_{old\text{-}right}$, a value of $\theta_R$ corresponding to $T_{old}$, defined as $\theta_{old\text{-}right}$, and a value of $Z_{old}$, which is a vertical perpendicular distance between $T_{old}$ and the mixed reality head-mounted display;

step 2: in response to the zoom-in command, obtaining a value of $Z_{new}$ based on the zoom-in command, wherein $Z_{new}$ is defined as a vertical perpendicular distance between the mixed reality head-mounted display and $T_{new}$ which is a new position of $T_{old}$ after being zoomed in from the original position, and then calculating $X_{new\text{-}left}$ and $X_{new\text{-}right}$ of $T_{new}$, wherein $X_{new\text{-}left}$ is a value of $X_L$ corresponding to $T_{new}$, and $X_{new\text{-}right}$ is a value of $X_R$ corresponding to $T_{new}$;

step 3: after obtaining $X_{new\text{-}left}$ and $X_{new\text{-}right}$, magnifying images displayed on the left screen and the right screen by $(X_{new} / X_{old})$ times, wherein $X_{new}$ represents a value of $X_L$ or $X_R$ corresponding to $T_{new}$, and $X_{old}$ represents a value of

$X_L$ or $X_R$ corresponding to $T_{old}$, then translating each pixel of the magnified image on the left screen simultaneously by a same distance as how the parallax viewing position on the left screen translate when $X_{old-left}$ is changed to $X_{new-left}$ when the target pixel T is zoomed in, and also translating each pixel of the magnified image on the right screen simultaneously by a same distance as how the parallax viewing position on the right screen translate when $X_{old-right}$ is changed to $X_{new-right}$ when the target pixel T is zoomed in.

Preferably, the present invention also comprises step 4: in response to a zoom-out command given by the user, obtaining a new vertical distance between a further new position $T_{new2}$ of the target pixel T and the mixed reality head-mounted display after the target pixel T is zoomed out from the new position $T_{new}$ in step 3 to said further new position $T_{new2}$ in response to the zoom-out command; calculating $X_{new2}$ which is a value of X corresponding to $T_{new2}$ using the method of step 2; during zoom-out process, shrink the magnified image of the left screen and the magnified image of the right screen of step 3 by ($X_{new2}$ / $X_{new}$) times, then translating each pixel of shrunk images on the left screen and the right screen simultaneously by a same distance as how the parallax viewing positions on the left screen and the right screen translate when $X_{new}$ is changed to $X_{new2}$ when the target pixel T is zoomed out.

Preferably, step 2 comprises the following steps:
given that the vertical perpendicular distance $Z_{old}$ between $T_{old}$ and the mixed reality head-mounted display is known, $X_{old-left}$ is known, and $X_{old-right}$ is known, a simplified formula $X_{new}=X_{old}(Z_{old}/Z_{new})$ is used to obtain:

$$X_{\text{new-left}}= X_{\text{old-left}}(Z_{\text{old}}/Z_{\text{new}}),$$

and

$$X_{\text{new-right}}= X_{\text{old-right}}(Z_{\text{old}}/Z_{\text{new}}).$$

Alternatively, step 2 may comprise the following steps:
assuming that the target pixel T is located in a region between the left central line and the right central line, then the left screen displays the target pixel T to a right side of the left central line, and the right screen displays the target pixel T to a left side of the right central line; in response to the zoom-in command, and based on a positional relationship between $X_{old-left}$ and $\theta_{old-left}$ of $T_{old}$, $X_{old-right}$ and $\theta_{old-right}$ of $T_{old}$, and the vertical perpendicular distance $Z_{old}$ between $T_{old}$ and the mixed reality head-mounted display, as well as a positional relationship between $X_{new-left}$ and $\theta_{new-left}$ of $T_{new}$ at a zoomed in position, $X_{new-right}$ and $\theta_{new-right}$ of said $T_{new}$, and the vertical perpendicular distance $Z_{new}$ between said $T_{new}$ and the mixed reality head-mounted display, the following formulas are obtained:

$$D_R = Z_{old} * TAN\left(\theta_{old-right}\right)$$
,

and

$$D_L = Z_{old} * TAN\left(\theta_{old-left}\right)$$
;

Since $D_L$ and $D_R$ remain unchanged when the target pixel T is zoomed in, therefore:

$$\Theta_{\text{new-left}}= TAN^{-1}\left(\frac{D_L}{Z_{new}}\right)$$
,

and

$$\theta_{\text{new-right}} = TAN^{-1}\left(\frac{D_R}{Z_{new}}\right) \quad ;$$

thus:

$$X_{\text{new-left}} = \theta_{\text{new-left}} * PPD \quad ,$$

and

$$X_{\text{new-right}} = \theta_{\text{new-right}} * PPD \quad ;$$

Taking point L and the point R as origins, if $T_{old}$ or $T_{new}$ falls to a left side of the left central line or to a right side of the right central line assign positive or negative values to X according to positive or negative values of the XY coordinate systems.

Preferably, if the vertical perpendicular distance $Z_{old}$ between $T_{old}$ and the mixed reality head-mounted display determined in step 1 exceeds a preset value, preset values are assigned to $Z_{old}$, $X_{old\text{-}left}$, $\theta_{old\text{-}left}$, $X_{old\text{-}right}$, and $\theta_{old\text{-}right}$.

Preferably, the zoom-in command or the zoom-out command are launched via assisting tools like control handles, control wristbands, and control rings, or lanuched through user's gestures.

A head-mounted display device, comprising at least two cameras configured to capture target images of a target area; the head-mounted display device comprises a memory and a processor, wherein the memory is configured to store computer programs; the processor is configured to execute the computer programs to implement any aspects of the method for processing environmental image data in video see-through as described above.

A computer readable storage medium, on which a computer program is stored; the computer program, when executed by a processor, implements any aspects of the method for processing environmental image data in video see-through as described above.

According to the technical solutions of the present invention, when a zoom-in command is received from a user, a target pixel T is determined as being the pixel closest to one end of a vertical perpendicular distance Z between the target pixel T and the mixed reality head-mounted display opposite to another end thereof at the mixed reality head-mounted display, and then calculating $X_{old}$; a new vertical perpendicular distance $Z_{new}$ between the target pixel T after being zoomed in and the mixed reality head-mounted display is obtained based on the zoom-in command, and then calculating $X_{new}$; next, magnifying the images on the left screen and the right screen by ($X_{new}/X_{old}$) times, and then translating each pixel of the magnified images on the left screen and the right screen simultaneously by a same distance as how the parallax viewing positions on the left screen and the right screen translate when $X_{old}$ is changed to $X_{new}$ when the target pixel T is zoomed in. During the zoom-in process of the target pixel T, the target pixel T moves perpendicularly towards the mixed reality head-mounted display so that the vertical perpendicular distance Z is reduced while the images on the left screen and the right screen are magnified accordingly. During the zoom-out process of the target pixel T, the target pixel T moves perpendicularly away from the mixed reality head-mounted display so that the vertical perpendicular distance Z is increased while the images on the left screen and the right screen are shrunk accordingly. The method for processing environment image data in VST according to the present invention is implemented only after mechanical focus adjustment of the cameras is completed. Accordingly, the present invention enables immersive viewing of the surrounding environment being zoomed in or out through VST. This allows users to magnify and observe distant or very small objects, and achieves the visual perception of objects being zoomed in or out.

BRIEF DESCRIPTION OF THE DRAWINGS

FIG. 1 is a schematic illustration of viewing a surrounding environment via VST as perceived on a left screen and a right screen, in which a target pixel T, a left camera and a right camera having a focal length f, and parallax between images of the left screen and the right screen are schematically illustrated.

FIG. 2 is a relationship curve between X ($X_L/X_R$) and distance Z by taking a logarithm of formula (2) for both the left and right sides.

FIG. 3 shows the change in parallax viewing positions during zoom in/out process of target pixel T in the present invention.

FIG. 4 shows determination of the target pixel T according to a pixel closest to one end of a distance represented by value Z.

FIG. 5 shows the relationship of the target pixel $T_{old}$ at the original position, $X_{old-left}$ and $X_{old-right}$, $\theta_{old-left}$ and $\theta_{old-right}$, and the vertical perpendicular distance $Z_{old}$ according to Embodiment 1.

FIG. 6 shows the relationship of the target pixel $T_{new}$ at a zoomed-in position, $X_{new-left}$ and $X_{new-right}$, $\theta_{new-left}$ and $\theta_{new-right}$, and the vertical perpendicular distance $Z_{new}$ according to Embodiment 1.

FIG. 7 shows a functional block diagram of a head-mounted display device of the present invention.

FIG. 8 illustrates the positional relationship between X, $\theta$ and Z when the target pixel T is zoomed out to a new position (i.e. target pixel $T_{new2}$ after zoomed out) according to embodiment 1 of the present invention.

FIG. 9 is a top view showing magnification or shrinking of a screen in accordance with zooming in or out operation according to embodiment 1 of the present invention.

## DETAILED DESCRIPTION OF THE INVENTION

The following will clearly and thoroughly describe the technical solutions in the embodiments of the present invention with reference to the accompanying drawings. Obviously, the described embodiments are only some but not all of the embodiments of the present invention. Based on the embodiments of the present invention, all other embodiments obtainable by skilled person in this field of art without involving invention effect shall also fall within the protection scope of the present invention.

It should be noted that the terms "first", "second", etc. in the specification and claims of the present invention are used to distinguish similar objects and do not necessarily describe a specific order or sequence. It should be understood that the terms used in this way can be interchanged under appropriate circumstances, so that the embodiments of the present invention described herein can be implemented in an order other than those illustrated or described herein. In addition, the terms "including" and "comprising" and any variations thereof are intended to cover non-exclusive inclusion. For example, a process, method, system, product, or device that includes a series of steps or units is not necessarily limited to those clearly listed steps or units, but may include other steps or units that are not explicitly listed or are inherent to the process, method, product, or device.

In the embodiments of the present invention, the terms "exemplary" or "for example" are used to indicate examples, illustrations, or explanations. Any embodiment or solution described as "exemplary" or "for example" in the embodiments of the present invention should not be construed as being more preferred or advantageous than other embodiments or solutions. Rather, the use of "exemplary" or "for example" is intended to present related concepts in a specific manner.

Technical principles of the present invention:

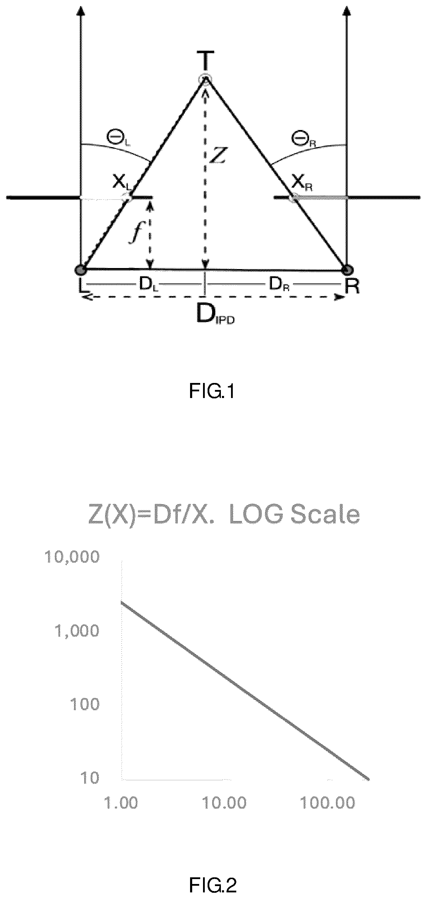

FIG.1 is a schematic diagram showing parallax between displays shown by a left screen and a right screen corresponding to a left camera and a right camera capturing the surrounding environment by video see-through (VST) where a target pixel is indicated as T in the surrounding environment and a focal length of the left camera and the right camera is indicated as f. Here, f is particularly an optical focal distance of the left camera and the right camera such that an imaging plane perceived by a user on the left screen and the right screen is formed at that optical focal distance. Assuming that the left screen and the right screen align screen pixels according to the field of view (FOV) of the left camera and the right camera respectively, a total number of pixels of an image captured by a respective camera is equal to a total number of screen pixels of a respective screen, or they are equal after correction (for example, the image captured by a camera has a total number of 2000 pixels while a respective screen has a total number of 2160 pixels; the MR glasses may choose to blacken the boundary of the respective screen so that only 2000 pixels are displayed through VST, or scale up the image by 1.08 times (2160/2000). Based on the understanding herein, "after correction" refers to a proportional up/down scaling of screen pixels after the image is scaled up/down). Given that a total number of pixels along an X-axis of a respective screen is $X_{total}$, and the FOV of the left camera and the right camera is known. With reference to FIG. 1, point L is used to represent a center point of the left screen and a center point of the left camera simultaneously, and point R is used to represent a center point of the right screen and a center point of the right camera simultaneously, a line connecting points L and R or a line parallel to the line connecting points L and R is defined as the X-axis. Establish XY coordinate systems on the left screen and the right screen respectively, with points L and R being origins of the XY coordinate systems respectively. With reference to FIG. 1 again, the target pixel T with respect to imaging planes of the left screen and the right screen at the optical focal distance f is displayed or viewed with parallax at two different positions on the left screen and the right screen respectively (i.e. the target pixel T appears at a right side of said point L, and the target pixel T appears at a left side of said point R), wherein on the left screen, a distance on the imaging plane of the left screen between a point corresponding to perpendicular projection of said point L on the imaging plane of the left screen and a parallax viewing position according to which the target pixel T is viewed is defined as $X_L$, and on the right screen, a distance on the imaging plane of the right screen between a point corresponding to perpendicular projection of said point R on the imaging plane of the right screen and a parallax viewing position according to which the target pixel T is viewed is defined as $X_R$. Values of $X_L$ and $X_R$ are represented on the left screen and on the right screen respectively as pixel values. With reference to FIG. 1 again, in the real world, D is used to represent values of how much a perpendicular projection point of the target pixel T onto the X-axis is distanced from said point L and said point R, specifically, a normal line extending from the target pixel T and intersecting perpendicularly with the X-axis divides D into $D_L$ and $D_R$, wherein $D_L$ is a distance between said point L and an intersection point of the normal line and the X-axis, and $D_R$ is a distance between said point R and the intersection point of the normal line and the X-axis. Define $D_L + D_R = D_{IPD}$, wherein $D_{IPD}$ is an interpupillary distance between the left camera and the right camera, i.e., a fixed known distance between said point L and said point R. During zoom in/out process of the target pixel T, $D_L$ and $D_R$ remain unchanged. As an object as viewed from the left screen and the right screen is zoomed in, the parallax viewing positions on the left screen and the right screen move along or parallel to the X-axis symmetrically from said point L and said point R towards a center of the MR glasses. A normal line passing perpendicularly through the X-axis at said point L is defined as a left central line, and a normal line passing perpendicularly through the X-axis at said point R is defined as a right central line. An angle between the left central line and a line passing through said point L and the parallax viewing position on the left screen according to which the target pixel T is viewed as defined as $\theta_L$; an angle between the right central line and a line passing through said point R and the parallax viewing position on the right screen according to which the target pixel T is viewed as defined as $\theta_R$. Since the processes of zooming in/out the target pixel T on the left screen and on the right screen are identical, for the sake of more convenient explanation of the principles of the present invention, formulas described below may apply to both the left screen and the right screen given that a subscript L or R is not particularly indicated.

As shown in FIG. 1, the following formulas are derived through triangular geometric calculations:

$$ZX_L = D_L f$$

$$ZX_R = D_R f \qquad (1);$$

Separate calculations can be performed for the left camera and the right camera, and the following converted formula can be used in both calculations for the left camera and the right camera:

$$Z(X) = Df/X \qquad (2);$$

wherein Z represents a vertical perpendicular distance between the target pixel T and the MR glasses; $X_L$ represents the distance on the imaging plane of the left screen between the point corresponding to perpendicular projection of said point L on the imaging plane of the left screen and the parallax viewing position according to which the target pixel T is viewed; $X_R$ represents the distance on the imaging plane of the right screen between the point corresponding to perpendicular projection of said point R on the imaging plane of the right screen and a parallax viewing position according to which the target pixel T is viewed; f is the focal length of the left camera and the right camera; $D_L$ represents a distance in the real world between said point L representing the center point of the left screen and the intersection point of the normal line extending from the target pixel T and intersecting perpendicularly with the X-axis; $D_R$ represents a distance in the real world between said point L representing the center point of the right screen and the intersection point of the normal line extending from the target pixel T and intersecting perpendicularly with the X-axis.

Parallax angle $\theta$ can also be used for calculation to obtain the following formulas:

$$\mathrm{Tan}(\theta_L) = D_L/Z = X_L/f$$

and

$$\mathrm{Tan}(\theta_R) = D_R/Z = X_R/f ;$$

since $D_L + D_R = D_{IPD}$, then

$$Z = D_{IPD} / (\mathrm{Tan}(\Theta_L) + \mathrm{Tan}(\Theta_R)) \quad (3);$$

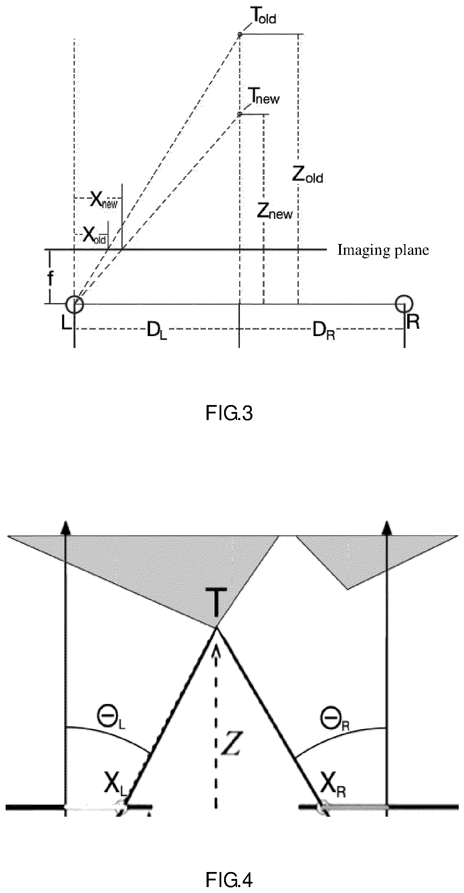

As shown in FIG. 3 and based on formula (2), during zoom in/out processes of the target pixel T, distance Z changes while $D_L$ and $D_R$ remain unchanged. The focal length f is a value that can only be changed during mechanical focus adjustment of the lenses of the left camera and the right camera, and because the present invention is a processing method after mechanical focus adjustment is completed, so the focal length f also remains unchanged. Since the value Df is constant, a simplified formula is obtained as follows:

$$Z_{new} X_{new} = Df = Z_{old} X_{old}$$

$$X_{new} = X_{old}(Z_{old}/Z_{new}) \qquad (4)$$

As shown in FIG. 3, assume $T_{old}$ is the target pixel T at an original position, $X_{old}$ is a distance on the imaging plane between the point corresponding to perpendicular projection of a respective point L or R on the imaging plane and a respective parallax viewing position according to which $T_{old}$ is viewed; $Z_{old}$ is a vertical perpendicular distance between $T_{old}$ and the MR glasses. After zooming in, $T_{old}$ changes to a new position, and the target pixel T at said new position is defined as $T_{new}$. Correspondingly, $Z_{new}$ representing a vertical perpendicular distance between $T_{new}$ and the MR glasses can be obtained based on user's commands (the same value can be provided for calculations for the left screen and the right screen). From the triangular relationships of $Z_{old}$ and $Z_{new}$, $X_{old}$ and $X_{new}$, $D_L$ and $D_R$, with $T_{old}$ and $T_{new}$, it can be seen that as the target pixel T moves closer to the MR glasses ($T_{old} > T_{new}$), the vertical perpendicular distance between the target pixel T and the MR glasses decreases ($Z_{old} > Z_{new}$), and the value of X increases ($X_{old} < X_{new}$). Conversely, if the target pixel T moves farther away from the MR glasses, the vertical distance Z increases, and the value of X decreases.

The present invention adjusts and executes user's zoom-in command according to the following steps:

step 1: when a zoom-in command from the user is received, $Z_{old}$ is first obtained according to said formula (3), and a pixel closest to one end of $Z_{old}$ opposite another end thereof at the MR glasses is defined as $T_{old}$ which is the target pixel T at the original position, and accordingly, $X_{old}$ is also obtained;
step 2: obtaining a value of $Z_{new}$ based on the zoom-in command, and then calculating $X_{new}$;
step 3: magnifying images displayed on the left screen and the right screen by ($X_{new} / X_{old}$) times, then translate each pixel of the magnified images on the left screen and the right screen simultaneously by a same distance as how the parallax viewing positions on the left screen and the right screen translate when $X_{old}$ is changed to $X_{new}$ when the target pixel T is zoomed in.

The present invention provides answers to potential problems which may be raised by a person skilled in the art:

Problem 1: Since $Z_{old}$ and $X_{old}$ of the target pixel T at the original position are not known at the time of receiving the zoom-in command, formula (4) $X_{new} = X_{old}(Z_{old}/Z_{new})$ cannot be directly used for calculating $X_{new}$ at the time of receiving the zoom-in command.
Problem 2: Assume the interpupillary distance $D_{IPD}$ of between the left camera and the right camera is 100 mm, $D_L$ and $D_R$ are both 50 mm, and the focal length f of the left camera and the right camera is 50 mm. Taking the logarithm of both sides (i.e. the left camera and the right camera) of formula (2) yields a relationship curve shown in FIG. 2 between X ($X_L/X_R$) and distance Z. During zooming in/out of the target pixel T, Df is a constant number, meaning that Z multiplied by X represents a proportional value, depending on an exact value of X, and this relationship between X and Z is visualized as a straight line as shown in FIG. 2 when logarithm is taken. When the scenes or images captured by the left camera and the right camera tend to be at an infinite distance, X tends to be 0. That is to say, if the target pixel T is at an infinite position, the target pixel T will be displayed at positions on the left screen and the right screen aligning with points L and R respectively, meaning that $X_L = X_R = 0$, or $\theta_L = \theta_R = 0$. This implies that during the process of determining $T_{old}$ in step (1), if $T_{old}$ is at an infinite position, and/or if $Z_{old}$ is infinite or near to infinite, then $X_{old} = 0$, making it impossible to calculate the $X_{new}$ by using formula (4).

Solution to Problem 1: Use the pixel/resolution of the left screen and the right screen and respective cameras' field of view (FOV) as preset by the manufacturer to calculate $Z_{old}$ and $X_{old}$.
The present invention uses open-source models and tools to align the images seen on the left screen and the right screen, thereby allowing comparison of each pixel. In theory, each pixel has corresponding $X_L$ and $X_R$ on the left screen and the right screen respectively. Since the left screen and the right screen of the MR glasses align pixels based on the FOV of the left camera and the right camera, a total number of pixels of an image captured by a respective camera is equal to a total number of screen pixels of a respective screen, or they are equal after correction. Given that a total number of pixels along the X-axis of the respective screen defined as $X_{total}$ is known, the FOV of the left camera and the right camera is known, the interpupillary distance $D_{IPD}$ is known, and let PPD = $X_{total}$ / FOV, then:

$$\theta_L = X_L / PPD ,$$

and

$$\theta_R = X_R / PPD \qquad (5);$$

by using formula (3), $Z_{old}$ is calculated, and a pixel closest to one end of $Z_{old}$ opposite another end thereof at the MR glasses is defined as $T_{old}$ which is the target pixel T at the original position. Accordingly, $X_{old}$ can be obtained.

There are many open-source programs that assist with depth calculations, which can calculate depth information of the images captured by the left camera and the right camera to obtain depth colors or grayscale values for each pixel in each of the images captured by the left camera and the right camera. Alternatively, depth colors, grayscale values, or depth information for each pixel in each of the images captured by the left camera and the right camera can be obtained using laser or time-of-flight (TOF) sensors. The existing technique for dual cameras to obtain images with depth involves: determining the internal parameters of the cameras (such as focal length, principal point position, etc.) and external parameters (position and orientation of coordinate systems relative to the real world); collecting image data of calibration boards captured by the cameras; then using MATLAB or OpenCV to calibrate the dual cameras, evaluating whether a deviation of superimposing the images captured by the dual cameras meets the predetermined requirements, verifying the correctness of corner point extraction, and saving all calibration results; using the calibration results to perform rectification of the two images captured by the same set of dual cameras, including image rectification and region of interest (ROI) cropping, to obtain row-aligned left/right views, and then performing depth estimation for the rectified views typically by using algorithms such as BM, SGBM, or GC in OpenCV to obtain parallax images; finally, an image with depth is calculated based on refined parallax images.

The present invention adopts existing image comparison technology to scan row by row a left image and a right image captured by the left camera and the right camera respectively, comparing all pixels in each row to find pixels in the left image and the right image with identical depth information or grayscale colors and consistent positional arrangements. Obtain values $X_L$ (on the left screen) and $X_R$ (on the right screen) of each of these pixels, and then calculate for each of these pixels:

$$\theta_L = X_L / PPD ,$$

and

$$\theta_R = X_R / PPD \qquad (5)$$

as well as value Z according to said formula (3) as reinstated below:

$$Z = \frac{D_{IPD}}{TAN(\theta_L) + TAN(\theta_R)} \qquad (3)$$

As shown in FIG. 4, a pixel closest to one end of a distance represented by value Z opposite another end thereof at the MR glasses is defined as $T_{old}$ which is the target pixel T at the original position. Save the original position data of $T_{old}$, and such original position data of $T_{old}$ includes a value of $X_L$ corresponding to $T_{old}$, specifically defined as $X_{old\text{-}left}$, a value of $\theta_L$ corresponding to $T_{old}$, specifically defined as $\theta_{old\text{-}left}$, a value of $X_R$ corresponding to $T_{old}$, specifically defined as $X_{old\text{-}righ}$, , a value of $\theta_R$ corresponding to $T_{old}$, specifically defined as $\theta_{old\text{-}right}$, and the value of $Z_{old}$, which is a vertical perpendicular distance between $T_{old}$ and the MR glasses.

After finding $T_{old}$, there are two methods to calculate $X_{new-left}$ and $X_{new-right}$ during zoom-in process of $T_{old}$, wherein $T_{new}$ is defined as the target pixel T at a new position after being zoomed in, $X_{new-left}$ is defined as the value of $X_L$ corresponding to $T_{new}$, and $X_{new-right}$ is defined as the value of $X_R$ corresponding to $T_{new}$.

First Method: Use the simplified formula (4): $X_{new}=X_{old}(Z_{old}/Z_{new})$:

In response to the user's zoom-in command, given that the vertical perpendicular distance $Z_{old}$ between $T_{old}$ and the MR glasses is known, $X_{old-left}$ is known, and $X_{old-right}$ is known, obtain $Z_{new}$ based on the user's zoom-in command, then calculate:

$$X_{new-left}= X_{old-left}(Z_{old}/Z_{new}),$$

and

$$X_{new-right}= X_{old-right}(Z_{old}/Z_{new}).$$

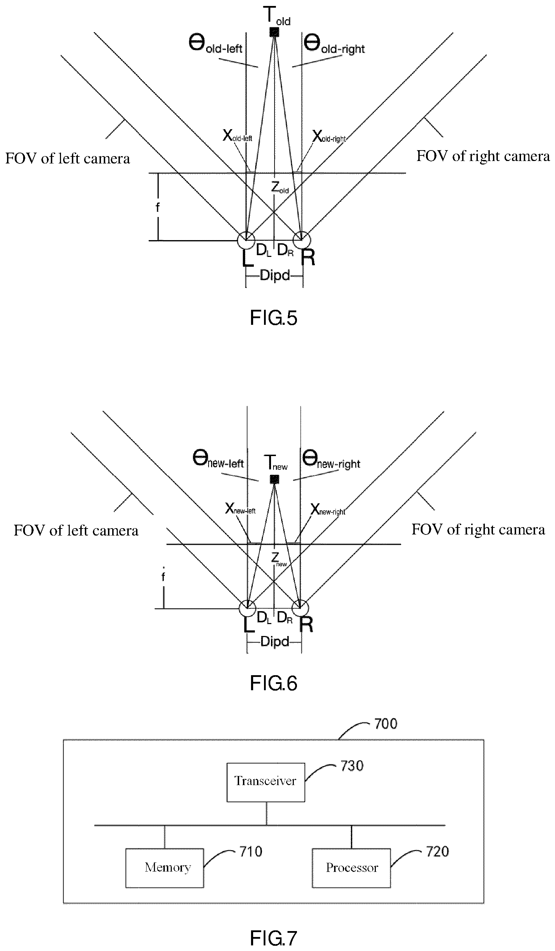

Second Method: Assume that the target pixel T is located in a region between the left central line and the right central line, then the left screen will display the target pixel T to a right side of the left central line, and the right screen will display the target pixel T to a left side of the right central line. As shown in FIGs. 5 and 6, in response to the user's zoom-in command, and based on a positional relationship between $X_{old-left}$ and $\theta_{old-left}$ of $T_{old}$, $X_{old-right}$ and $\theta_{old-right}$ of $T_{old}$, and the vertical perpendicular distance $Z_{old}$ between $T_{old}$ and the MR glasses, as well as a positional relationship between $X_{new-left}$ and $\theta_{new-left}$ of $T_{new}$ at a zoomed in position, $X_{new-right}$ and $\theta_{new-right}$ of said $T_{new}$, and the vertical perpendicular distance $Z_{new}$ between said $T_{new}$ and the MR glasses, the following formulas are obtained:

$$D_R = Z_{old} * TAN\left(\theta_{old-right}\right)$$

$$D_L = Z_{old} * TAN\left(\theta_{old-left}\right) \qquad (6)$$

Since $D_L$ and $D_R$ remain unchanged during the zoom-in process of the target pixel T, therefore:

$$\theta_{new-left}= TAN^{-1}\left(\frac{D_L}{Z_{new}}\right)$$

$$\theta_{new-right}= TAN^{-1}\left(\frac{D_R}{Z_{new}}\right) \qquad (7);$$

thus:

$$X_{new-left}=\theta_{new-left}*PPD,$$

and

$$X_{new-right}=\theta_{new-right}*PPD;$$

If $T_{old}$ or $T_{new}$ falls to a left side of the left central line or to a right side of the right central line, take the point L and the point R as origins, and assign positive or negative values to X accordingly.

Under the premise that a position of the target pixel T relative to the real world as perceived by the user remains unchanged, the present invention can realize a perception that the target pixel T is zoomed in or out by using through the method described above. A traditional smartphone only has a single camera, therefore, scaling up and down of an image doesn't create the perception of an object being zoomed in and out. Since a pair of smart glasses (MR glasses according to an embodiment of the present invention) has at least two cameras and a left screen and a right screen for both eyes, VST enables immersive viewing of the environment. To achieve visual perception of zooming in/out, the parallax viewing positions of the target pixel T before and after zooming in/out on the left screen and the right screen, as well as a scale of the entire images captured on the left screen and the right screen before and after zooming in/out must be adjusted. Therefore, each pixel of the magnified (scaled up) images on the left screen and the right screen must be translated simultaneously by a same distance as how the parallax viewing positions on the left screen and the right screen translate when $X_{old}$ is changed to $X_{new}$ when the target pixel T is zoomed in/out.

Specifically, after $X_{new-left}$ and $X_{new-right}$ are obtained, magnify the entire images on the left screen and the right screen by $(X_{new} / X_{old})$ times, then each pixel of the magnified (scaled up) image on the left screen must be translated simultaneously by a same distance as how the parallax viewing positions on the left screen translate when $X_{old-left}$ is changed to $X_{new-left}$, and each pixel of the magnified (scaled up) image on the right screen must be translated simultaneously by a same distance as how the parallax viewing positions on the right screen translate when $X_{old-right}$ is changed to $X_{new-right}$.

Solution to Problem 2: In practice, if value Z tends to be infinite, $\Delta X$ after zoom in/out will tends to be 0 or otherwise very small, making users barely able to perceive the zooming effects. In this case, let the vertical perpendicular distance $Z_{old}$ between $T_{old}$ and the MR glasses as a preset definite value N which represents a closer distance, for example, N can be set as 5 meters or 5000 mm; simultaneously, let the interpupillary distance $D_{IPD}$ between the left camera and the right camera as 100 mm, making a distance D between a point of perpendicular projection of the target pixel T onto the X-axis and a respective point L or R being 50 mm, and the focal length f of the left camera and the right camera is 50 mm. Accordingly, $X_{old} = (50 \times 50) / 5000 = 0.5$. With these two assumed variables N and $D_{IPD}$, use formula (4) to obtain $X_{new}$ and then follow step (3) described above to magnify images and translate the pixels to realize zoom in/out effects. Specifically, take zooming in as an example, assuming from a zoom-in command of a user that the target pixel T is zoomed in from 5 meters away, $Z_{old} = 5000$ mm, $Z_{new}$ is obtained based on the zoom-in command, $X_{new}$ can then be obtained, and then magnify the images of the left screen and the right screen by $(X_{new} / X_{old})$ times, then translate each pixel of each of the magnified images on the left screen and the right screen simultaneously by a same distance towards an interior of the respective image as how the parallax viewing positions translate when $X_{old}$ is changed to $X_{new}$.

Embodiment 1

The first embodiment of the present invention provides a method for processing environmental image data in video see-through (VST), applicable to a system of a mixed reality (MR) head-mounted display; at least two cameras of the system for two eyes of a user capture real environment images, which are displayed on a left screen and a right screen of the head-mounted display for users to view. Based on user's interactive commands, the system post-processes the real environment images to create visual effects of zooming in/out of objects within the real environment images. The interactive commands include preset zoom-in and zoom-out commands. The system predicts a zoom distance based on the interactive commands. The real environment images refer to images of the real world captured by said at least two cameras. The system post-processes the real environment images according to the following steps:

step 1: in response to a zoom-in command given by the user who views the real environment images through VST, determining a target pixel T based on a distance Z which is a vertical perpendicular distance between the target pixel T and the mixed reality (MR) head-mounted display, wherein a pixel closest to one end of said distance Z opposite another end thereof at the mixed reality (MR) head-mounted display is defined as the target pixel T; step 1 comprises the following steps:

assuming the left screen and the right screen of the mixed reality (MR) head-mounted display align pixels based on field of view (FOV) of a left camera and a right camera of the system respectively, a total number of pixels of an image captured by a respective one of the left camera and right camera is equal to a total number of screen pixels of a respective one of the left screen and the right screen either with or without correction; given that a total number of pixels along an X-axis of a respective one of the left screen and the right screen is $X_{total}$, the FOV of the left camera and the right camera is known, an interpupillary distance $D_{IPD}$ between the left camera and the right camera is known, and let a pixel per degree (PPD) being PPD = $X_{total}$ / FOV; using point L to represent a center point of the left screen and a center point of the left camera simultaneously, and using point R to represent a center point of the right screen and a center point of the right camera simultaneously, a line connecting said point L and said point R or a line parallel to the line connecting said point L and said point R is defined as the X-axis; establishing XY coordinate systems on the left screen and the right screen respectively, with said point L and said point R being origins of the XY coordinate systems respectively; wherein on the left screen, a distance on an imaging plane of the left screen between a point corresponding to perpendicular projection of said point L on the imaging plane of the left screen and a parallax viewing position according to which the target pixel T is viewed is defined as $X_L$, and on the right screen, a distance on an imaging plane of the right screen between a point corresponding to perpendicular projection of said point R on the imaging plane of the right screen and a parallax viewing position according to which the target pixel T is viewed is defined as $X_R$; values of said $X_L$ and said $X_R$ are represented on the left screen and on the right screen respectively as pixel values; as an object as viewed from the left screen and the right screen is zoomed in, the parallax viewing positions on the left screen and the right screen move along or parallel to the X-axis symmetrically from said point L and said point R towards a center of the mixed reality (MR) head-mounted display; a normal line passing perpendicularly through the X-axis at said point L is defined as a left central line, and a normal line passing perpendicularly through the X-axis at said point R is defined as a right central line; an angle between the left central line and a line passing through said point L and the parallax viewing position on the left screen according to which the target pixel T is viewed as defined as $\theta_L$; an angle between the right central line and a line passing through said point R and the parallax viewing position on the right screen according to which the target pixel T is viewed as defined as $\theta_R$; in the real world, D is used to represent values of how much a perpendicular projection point of the target pixel T onto the X-axis is distanced from said point L and said point R, wherein a normal line extending from the target pixel T and intersecting perpendicularly with the X-axis divides D into $D_L$ and $D_R$, wherein $D_L$ is a distance between said point L and an intersection point of the X-axis and the normal line extending from the target pixel T and intersecting perpendicularly with the X-axis, and $D_R$ is a distance between said point R and the intersection point of the X-axis and the normal line extending from the target pixel T and intersecting perpendicularly with the X-axis; defining $D_L+D_R=D_{IPD}$, wherein $D_{IPD}$ is the interpupillary distance between the left camera and the right camera and also a fixed known distance between said point L and said point R; during zoom in/out process of the target pixel T, $D_L$ and $D_R$ remain unchanged;

scanning row by row a left image and a right image captured by the left camera and the right camera respectively, comparing all pixels in each row to find pixels in the left image and the right image with identical depth information or grayscale colors and consistent positional arrangements; Obtaining values of $X_L$ and $X_R$ of each of these pixels, and then calculate for each of these pixels:

$$\theta_L = X_L / PPD \quad,$$

and

$$\theta_R = X_R / PPD \quad,$$

as well as the distance Z according to the following formula:

$$Z = \frac{D_{IPD}}{TAN(\theta_L) + TAN(\theta_R)} \quad;$$

defining the pixel closest to said one end of said distance Z opposite said another end thereof at the mixed reality (MR) head-mounted display as the target pixel T, which is currently at an original position; said target pixel T at said original position is defined as $T_{old}$; saving the original position data of $T_{old}$, and said original position data of $T_{old}$ includes a value of $X_L$ corresponding to $T_{old}$, defined as $X_{old\text{-}left}$, a value of $\theta_L$ corresponding to $T_{old}$, defined as $\theta_{old\text{-}left}$, a value of $X_R$ corresponding to $T_{old}$, defined as $X_{old\text{-}right}$, a value of $\theta_R$ corresponding to $T_{old}$, defined as $\theta_{old\text{-}right}$, and a value of $Z_{old}$, which is a vertical perpendicular distance between $T_{old}$ and the mixed reality (MR) head-mounted display.

Step 2: in response to the user's zoom-in command, obtaining a value of $Z_{new}$ based on the zoom-in command, wherein $Z_{new}$ is defined as a vertical perpendicular distance between the mixed reality (MR) head-mounted display and $T_{new}$ which is the target pixel T at a new position after being zoomed in from the original position, and then calculating $X_{new\text{-}left}$ and $X_{new\text{-}right}$ of $T_{new}$ as follows, wherein $X_{new\text{-}left}$ is a value of $X_L$ corresponding to $T_{new}$, and $X_{new\text{-}right}$ is a value of $X_R$ corresponding to $T_{new}$:

First Method: given that the vertical perpendicular distance $Z_{old}$ between $T_{old}$ and the mixed reality (MR) head-mounted display is known, $X_{old\text{-}left}$ is known, and $X_{old\text{-}right}$ is known, a simplified formula $X_{new}=X_{old}(Z_{old}/Z_{new})$ is used to obtain:

$$X_{new\text{-}left} = X_{old\text{-}left}(Z_{old}/Z_{new}),$$

and

$$X_{new\text{-}right} = X_{old\text{-}right}(Z_{old}/Z_{new});$$

Second Method: assuming that the target pixel T is located in a region between the left central line and the right central line, then the left screen displays the target pixel T to a right side of the left central line, and the right screen displays the target pixel T to a left side of the right central line; in response to the user's zoom-in command, and based on a positional relationship between $X_{old\text{-}left}$ and $\theta_{old\text{-}left}$ of $T_{old}$, $X_{old\text{-}right}$ and $\theta_{old\text{-}right}$ of $T_{old}$, and the vertical perpendicular distance $Z_{old}$ between $T_{old}$ and the mixed reality (MR) head-mounted display, as well as a positional relationship between $X_{new\text{-}left}$ and $\theta_{new\text{-}left}$ of $T_{new}$ at a zoomed in position, $X_{new\text{-}right}$ and $\theta_{new\text{-}right}$ of said $T_{new}$, and a vertical perpendicular distance $Z_{new}$ between said $T_{new}$ and the mixed reality (MR) head-mounted display, the following formulas are obtained:

$$D_R = Z_{old} * TAN\left(\theta_{old-right}\right)$$

$$D_L = Z_{old} * TAN\left(\theta_{old-left}\right) \qquad (6)$$

Since $D_L$ and $D_R$ remain unchanged when the target pixel T is zoomed in, therefore:

$$\theta_{new\text{-}left} = TAN^{-1}\left(\frac{D_L}{Z_{new}}\right)$$

$$\theta_{new\text{-}right} = TAN^{-1}\left(\frac{D_R}{Z_{new}}\right) \qquad (7);$$

thus:

$$X_{new-left} = \theta_{new-left} * PPD,$$

and

$$X_{new-right} = \theta_{new-right} * PPD;$$

As shown in FIGs. 5 and 6, since point L and the point R are taken as origins, if $T_{old}$ or $T_{new}$ falls to a left side of the left central line or to a right side of the right central line, simply assign positive or negative values to X according to positive or negative values of the XY coordinate systems.

It should be noted that the calculated X values may exceed screen dimensions. Each mixed reality (MR) head-mounted display (e.g. MR glasses) has a specific FOV. For example, in a screen having 100° FOV and 2000 X-axis pixels, a left side and a right side of the screen each being of 50° FOV will each contain 1000 pixels or a number of pixels being ($X_{total}/2$), given that a center of the screen is taken as the origin. If X exceeds ±1000 pixels, it cannot be displayed.

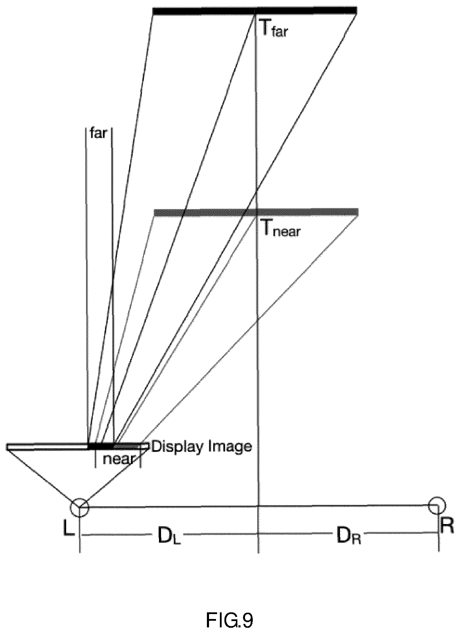

Step 3: As shown in FIG. 9, after obtaining $X_{new\text{-}left}$ and $X_{new\text{-}right}$, magnifying images displayed on the left screen and the right screen by ($X_{new}$ / $X_{old}$) times, then translating each pixel of the magnified image on the left screen simultaneously by a same distance as how the parallax viewing position on the left screen translate when $X_{old\text{-}left}$ is changed to $X_{new\text{-}left}$ when the target pixel T is zoomed in, and also translating each pixel of the magnified image on the right screen simultaneously by a same distance as how the parallax viewing position on the right screen translate when $X_{old\text{-}right}$ is changed to $X_{new\text{-}right}$ when the target pixel T is zoomed in.

As shown in FIGs. 5 and 6, when $T_{old}$ is zoomed in to the new position, $X_{old\text{-}left}$ and $X_{old\text{-}right}$ are adjusted to $X_{new\text{-}left}$ and $X_{new\text{-}right}$. Therefore, pixel positions of the real world images must also be proportionally adjusted. Let $X_{total\text{-}old} = X_{total}$, then $X_{total\text{-}new} = X_{total\text{-}old} * (X_{old\text{-}left}/X_{new\text{-}left}) = X_{total} * (X_{old\text{-}left}/X_{new\text{-}left})$, and $PPD_{new} = PPD_{old} * (X_{old\text{-}left}/X_{new\text{-}left})$. Since the number of total pixels of the screen remains $X_{total}$, each pixel of the real world image displayed on each pixel of the screen before image magnification can now only be displayed by every $(X_{new} / X_{old})$ pixels of the screen after image magnification. For example, if the total number of screen pixels and a total number of pixels of a real world image is consistent, for example, having 2000 total pixels, and given 100° FOV and $PPD_{old}$ being 20, and given that $X_{total\text{-}new}$ is now 1000, then $PPD_{new}$ is 10. Given that the total number of screen pixels remains 2000, it can be concluded that each pixel of the real world image displayed on each pixel of the screen before image magnification can now only be displayed by every 2 pixels of the screen after image magnification. In other words, the image is magnified by two times.

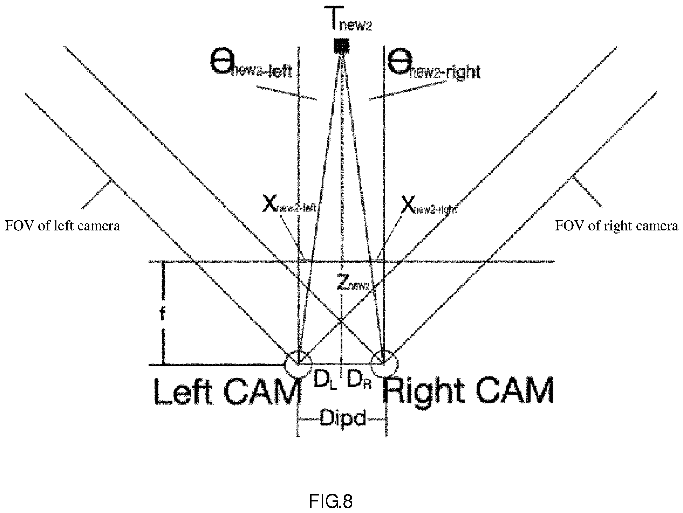

Step 4: As shown in FIG. 8, in response to a user's zoom-out command, obtaining a new vertical distance between a further new position $T_{new2}$ of the target pixel T and the mixed reality (MR) head-mounted display after the target pixel T is zoomed out from the new position $T_{new}$ in step 3 to said further new position $T_{new2}$ in response to the user's zoom-out command; calculating $X_{new2}$ which is a value of X corresponding to $T_{new2}$ using the method of step 2. During zoom-out process, as shown in FIG. 9, shrink the magnified image of the left screen and the magnified image of the right screen of step 3 by $(X_{new2} / X_{new})$ times, then translating each pixel of shrunk images on the left screen and the right screen by a same distance as how the parallax viewing positions on the left screen and the right screen translate when $X_{new}$ is changed to $X_{new2}$ when the target pixel T is zoomed out.

To prevent black boundaries on the left screen and the right screen during the zoom-out process when the images are shrunk into excessively small size, limit the zoom-out process to stop when image size returns to its original size captured by the cameras. Alternatively, continued zoom-out process may be allowed, but this will result in the captured images smaller than the respective screens, resulting in shrunk images surrounded by black color or AI-generated virtual environment constructed through AIGC technology.

If the vertical perpendicular distance $Z_{old}$ between $T_{old}$ and the mixed reality (MR) head-mounted display determined in step 1 exceeds a preset value, preset values are assigned to $Z_{old}$, $X_{old\text{-}left}$, $\theta_{old\text{-}left}$, $X_{old\text{-}right}$, and $\theta_{old\text{-}right}$.

The user's zoom-in/out commands can be launched via assisting tools like control handles, control wristbands and control rings, or they can be launched through user's gestures. User's zoom-in/out commands and how they can be launched can be customized and are already known in the prior arts. The present invention is not intended to provide technical solutions to these issues, so therefore they will not be discussed in the present invention.

The present invention predicts the zoom-in/out distance based on interactive commands, which can be implemented through various existing techniques - for example, by converting the duration specified in the interactive commands or by deriving from amplitude of the user's gestures. These issues do not constitute part of the inventive technical solutions of the present invention, so therefore they will not be discussed herein.

A person skilled in this field of art should further realize that, the units and algorithm steps of the examples described with reference to the disclosed embodiments of the present invention can be implemented by electronic hardware, computer software, or a combination of both. To clearly illustrate the interchangeability of hardware and software, the components and steps of each example have been generally described in terms of functions in the foregoing description. Whether these functions are implemented by hardware or software depends on the specific applications and design constraints of the technical solutions. A person skilled in this field of art can use different methods to implement the described functions for each specific application, but all those implementations should not be considered exceeding the scope of the present invention.

Specifically, the steps of the method embodiments of the present invention can be completed by integrated logic circuits in a hardware of a processor and/or by software instructions from the processor. The steps of the methods disclosed with reference to the embodiments of the present invention can be directly embodied as being executed and completed by a hardware decoding processor, or executed and completed by a combination of hardware and software modules in the hardware decoding processor. The software modules can be located in known storage medium in the field, such as random access memory, flash memory, read-only memory, programmable read-only memory, electrically erasable programmable memory, or registers. The storage medium is located in a memory, and the processor reads the information in the memory and completes the steps in the method embodiments in combination with its hardware.

Embodiment 2

The second embodiment of the present invention provides a head-mounted display device, as shown in Figure 7. The head-mounted display device 700 comprises: a memory 710 and a processor 720, wherein the memory 710 is configured to store computer programs and transmit program codes to the processor 720. In other words, the processor 720 can call and execute the computer programs from the memory 710 to implement the method in embodiment 1 of the present invention. For example, the processor 720 can execute the method described in embodiment 1 according to the instructions stored in the computer programs.

In some embodiments of the present invention, the processor 720 includes but not limited to:

a general-purpose processor, a digital signal processor (DSP), an application-specific integrated circuit (ASIC), a field-programmable gate array (FPGA) or other programmable logic devices, discrete gates or transistor logic devices, or discrete hardware components.

In some embodiments of the present invention, the memory 710 includes but not limited to: volatile memory and/or non-volatile memory. The non-volatile memory may be read-only memory (ROM), programmable read-only memory (PROM), erasable programmable read-only memory (EPROM), electrically erasable programmable read-only memory (EEPROM), or flash memory. The volatile memory may be random access memory (RAM), which serves as external cache memory. By way of non-limiting examples, many forms of RAM are available, such as static random access memory (SRAM), dynamic random access memory (DRAM), synchronous dynamic random access memory (SDRAM), double data rate synchronous dynamic random access memory (DDR SDRAM), enhanced synchronous dynamic random access memory (ESDRAM), synch link dynamic random access memory (SLDRAM), and direct Rambus RAM (DRRAM).

In some embodiments of the present invention, a computer program may be divided into one or more modules, which are stored in the memory 710 and executed by the processor 720 to complete the method described in embodiment 1 of the present invention. The one or more modules may be a series of computer program instruction segments capable of performing specific functions, said computer program instruction segments are configured to describe execution processes of the computer program in the head-mounted display device 700.

As shown in FIG. 7, the head-mounted display device 700 also comprises: a transceiver 730 connected to the processor 720 or the memory 710. The processor 720 may control the transceiver 730 to communicate with other devices, specifically to send information or data to other devices or receive information or data sent by the other devices. The transceiver 730 may comprise at least two cameras for capturing target images of a target area.

It should be understood that various components in the head-mounted display device 700 are connected through a bus system. In addition to a data bus, the bus system also includes a power bus, a control bus, and a status signal bus.

Embodiment 3:

The third embodiment of the present invention also provides a computer storage medium on which a computer program is stored; the computer program, when executed by a computer, enables the computer to execute the method described in embodiment 1 of the present invention.

The specific implementations described above explain the objectives, technical solutions, and beneficial effects of the present invention in detail. It should be understood that the above descriptions are only specific implementations of the present invention and are not intended to limit the protection scope of the present invention. Any modifications, equivalent replacements, or improvements made within the spirit and principles of the present invention shall be included in the protection scope of the present invention.

**Claims**

1. A method for processing environmental image data in video see-through, applicable to a system of a mixed reality head-mounted display; at least two cameras of the system corresponding to two eyes of a user capture real environment images, which are displayed and viewed on a left screen and a right screen of the mixed reality head-mounted display; wherein:

   based on user's interactive commands, the system post-processes the real environment images to create visual effects of zooming in/out of objects within the real environment images; the interactive commands include preset zoom-in and zoom-out commands; the system predicts a zoom distance based on the interactive commands; the system post-processes the real environment images according to the following steps:

   step 1: in response to a zoom-in command given by the user who views the real environment images through VST, determining a target pixel T based on a distance Z which is a vertical perpendicular distance between the target pixel T and the mixed reality head-mounted display, wherein a pixel closest to one end of said distance Z opposite another end thereof at the mixed reality head-mounted display is defined as the target pixel T; step 1 comprises the following steps:

   assuming the left screen and the right screen of the mixed reality head-mounted display align pixels based on field of view (FOV) of a left camera and a right camera of the system respectively, a total number of pixels of an image captured by a respective one of the left camera and right camera is equal to a total number of screen pixels of a respective one of the left screen and the right screen either with or without correction; given that a total number of pixels along an X-axis of a respective one of the left screen and the right screen is $X_{total}$, the FOV of the left camera and the right camera is known, an interpupillary distance ($D_{IPD}$) between the left camera and the right camera is known, and let a pixel per degree (PPD) being PPD = $X_{total}$ / FOV; using point L to represent a center point of the left screen and a center point of the left camera simultaneously, and using point R to represent a center point of the right screen and a center point of the right camera simultaneously, a line connecting said point L and said point R or a line parallel to the line connecting said point L and said point R is defined as the X-axis; establishing XY coordinate systems on the left screen and the right screen respectively, with said point L and said point R being origins of the XY coordinate systems respectively; wherein on the left screen, a distance on an imaging plane of the left screen between a point corresponding to perpendicular projection of said point L on the imaging plane of the left screen and a parallax viewing position according to which the target pixel T is viewed is defined as $X_L$, and on the right screen, a distance on an imaging plane of the right screen between a point corresponding to perpendicular projection of said point R on the imaging plane of the right screen and a parallax viewing position according to which the target pixel T is viewed is defined as $X_R$; values of said $X_L$ and said $X_R$ are represented on the left screen and on the right screen respectively as pixel values; as an object as viewed from the left screen and the right screen is zoomed in, the parallax viewing positions on the left screen and the right screen move along or parallel to the X-axis symmetrically from said point L and said point R towards a center of the mixed reality head-mounted display; a normal line passing perpendicularly through the X-axis at said point L is defined as a left central line, and a normal line passing perpendicularly through the X-axis at said point R is defined as a right central line; an angle between the left central line and a line passing through said point L and the parallax viewing position on the left screen according to which the target pixel T is viewed as defined as $\theta_L$; an angle between the right central line and a line passing through said point R and the parallax viewing position on the right screen according to which the target pixel T is viewed as defined as $\theta_R$; in the real world, D is used to represent values of how much a perpendicular projection point of the target pixel T onto the X-axis is distanced from said point L and said point R, wherein a normal line extending from the target pixel T and intersecting perpendicularly with the X-axis divides D into $D_L$ and $D_R$, wherein $D_L$ is a distance between said point L and an intersection point of the X-axis and the normal line extending from the target pixel T and intersecting perpendicularly with the X-axis, and $D_R$ is a distance between said point R and the intersection point of the X-axis and the normal line extending from the target pixel T and intersecting perpendicularly with the X-axis; defining $D_L+D_R=D_{IPD}$, wherein $D_{IPD}$ is the interpupillary distance between the left camera and the right camera and also a fixed known distance between said point L and said point R; during zoom in/out process of the target pixel T, $D_L$ and $D_R$ remain unchanged;

scanning row by row a left image and a right image captured by the left camera and the right camera respectively, comparing all pixels in each row to find pixels in the left image and the right image with identical depth information or grayscale colors and consistent positional arrangements; obtaining values of $X_L$ and $X_R$ of each of these pixels, and then calculate for each of these pixels:

$$\theta_L = X_L / PPD \quad ,$$

and

$$\theta_R = X_R / PPD \quad ,$$

as well as the distance Z according to the following formula:

$$Z = \frac{D_{IPD}}{TAN(\theta_L) + TAN(\theta_R)} \; ;$$

defining the pixel closest to said one end of said distance Z opposite said another end thereof at the mixed reality head-mounted display as the target pixel T, which is currently at an original position; said target pixel T at said original position is defined as $T_{old}$; saving original position data of $T_{old}$, wherein said original position data of $T_{old}$ includes a value of $X_L$ corresponding to $T_{old}$, defined as $X_{old-left}$, a value of $\theta_L$ corresponding to $T_{old}$, defined as $\theta_{bold-left}$, a value of $X_R$ corresponding to $T_{old}$, defined as $X_{old-right}$, a value of $\theta_R$ corresponding to $T_{old}$, defined as $\theta_{old-right}$, and a value of $Z_{old}$, which is a vertical perpendicular distance between $T_{old}$ and the mixed reality head-mounted display;

step 2: in response to the zoom-in command, obtaining a value of $Z_{new}$ based on the zoom-in command, wherein $Z_{new}$ is defined as a vertical perpendicular distance between the mixed reality head-mounted display and $T_{new}$ which is a new position of $T_{old}$ after being zoomed in from the original position, and then calculating $X_{new-left}$ and $X_{new-right}$ of $T_{new}$, wherein $X_{new-left}$ is a value of $X_L$ corresponding to $T_{new}$, and $X_{new-right}$ is a value of $X_R$ corresponding to $T_{new}$;

step 3: after obtaining $X_{new-left}$ and $X_{new-right}$, magnifying images displayed on the left screen and the right screen by $(X_{new} / X_{old})$ times, wherein $X_{new}$ represents a value of $X_L$ or $X_R$ corresponding to $T_{new}$, and $X_{old}$ represents a value of $X_L$ or $X_R$ corresponding to $T_{old}$, then translating each pixel of the magnified image on the left screen simultaneously by a same distance as how the parallax viewing position on the left screen translate when $X_{old-left}$ is changed to $X_{new-left}$ when the target pixel T is zoomed in, and also translating each pixel of the magnified image on the right screen simultaneously by a same distance as how the parallax viewing position on the right screen translate when $X_{old-right}$ is changed to $X_{new-right}$ when the target pixel T is zoomed in.

2. The method for processing environmental image data in video see-through of claim 1, further comprising step 4: in response to a zoom-out command given by the user, obtaining a new vertical distance between a further new position $T_{new2}$ of the target pixel T and the mixed reality head-mounted display after the target pixel T is zoomed out from the new position $T_{new}$ in step 3 to said further new position $T_{new2}$ in response to the zoom-out command; calculating $X_{new2}$ which is a value of X corresponding to $T_{new2}$ using the method of step 2; during zoom-out process, shrink the magnified image of the left screen and the magnified image of the right screen of step 3 by $(X_{new2} / X_{new})$ times, then translating each pixel of shrunk images on the left screen and the right screen simultaneously by a same distance as how the parallax viewing positions on the left screen and the right screen translate when $X_{new}$ is changed to $X_{new2}$ when the target pixel T is zoomed out.

3. The method for processing environmental image data in video see-through of claim 1, wherein step 2 comprises the following steps:

given that the vertical perpendicular distance $Z_{old}$ between $T_{old}$ and the mixed reality head-mounted display is known, $X_{old-left}$ is known, and $X_{old-right}$ is known, a simplified formula $X_{new}=X_{old}(Z_{old}/Z_{new})$ is used to obtain:

$$X_{new-left}= X_{old-left}(Z_{old}/Z_{new}),$$

and

$$X_{new-right}= X_{old-right}(Z_{old}/Z_{new}).$$

4. The method for processing environmental image data in video see-through of claim 1, wherein step 2 comprises the following steps:

assuming that the target pixel T is located in a region between the left central line and the right central line, then the left screen displays the target pixel T to a right side of the left central line, and the right screen displays the target pixel T to a left side of the right central line; in response to the zoom-in command, and based on a positional relationship between $X_{old-left}$ and $\theta_{old-left}$ of $T_{old}$, $X_{old-right}$ and $\theta_{old-right}$ of $T_{old}$, and the vertical perpendicular distance $Z_{old}$ between $T_{old}$ and the mixed reality head-mounted display, as well as a positional relationship between $X_{new-left}$ and $\theta_{new-left}$ of $T_{new}$ at a zoomed in position, $X_{new-right}$ and $\theta_{new-right}$ of said $T_{new}$, and the vertical perpendicular distance $Z_{new}$ between said $T_{new}$ and the mixed reality head-mounted display, the following formulas are obtained:

$$D_R = Z_{old} * TAN\left(\theta_{old-right}\right),$$

and

$$D_L = Z_{old} * TAN\left(\theta_{old-left}\right);$$

since $D_L$ and $D_R$ remain unchanged when the target pixel T is zoomed in, therefore:

$$\theta_{\text{new-left}} = TAN^{-1}\left(\frac{D_L}{Z_{new}}\right),$$

and

$$\theta_{\text{new-right}} = TAN^{-1}\left(\frac{D_R}{Z_{new}}\right);$$

thus:

$$X_{new-left} = \theta_{new-left} * PPD,$$

and

$$X_{new-right} = \theta_{new-right} * PPD;$$

taking the point L and the point R as origins, if $T_{old}$ or $T_{new}$ falls to a left side of the left central line or to a right side of the right central line, assign positive or negative values to X according to positive or negative values of the XY coordinate systems.

5. The method for processing environmental image data in video see-through of claim 1, wherein if the vertical perpendicular distance $Z_{old}$ between $T_{old}$ and the mixed reality head-mounted display determined in step 1 exceeds a preset value, preset values are assigned to $Z_{old}$, $X_{old-left}$, $\theta_{old-left}$, $X_{old-right}$, and $\theta_{old-right}$.

6. A head-mounted display device (700), comprising at least two cameras configured to capture target images of a target area; the head-mounted display device comprises a memory (710) and a processor (720), wherein the memory (710) is configured to store computer programs; the processor (720) is configured to execute the computer programs to implement the method for processing environmental image data in video see-through as in any one of claims 1 to 5.

7. A computer readable storage medium, on which a computer program is stored; the computer program, when executed by a processor (720), implements the method for processing environmental image data in video see-through as in any one of claims 1 to 5.

FIG.1

FIG.2

FIG.3

FIG.4

FOV of left camera                    FOV of right camera

FIG.5

FOV of left camera                    FOV of right camera

FIG.6

FIG.7

FIG.8

FIG.9

## EUROPEAN SEARCH REPORT

**Application Number**

EP 25 19 1202

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2023/021450 A1 (AUGMEDICS LTD [IL]) 23 February 2023 (2023-02-23) * the whole document * | 1-7 | INV. H04N13/128 H04N13/139 |
| X,P | & US 2024/377640 A1 (ASABAN ASAF [IL] ET AL) 14 November 2024 (2024-11-14) * the whole document * ----- | 1-7 | H04N13/239 H04N13/344 H04N23/69 |

**TECHNICAL FIELDS SEARCHED (IPC)**

H04N

The present search report has been drawn up for all claims

| Place of search | Date of completion of the search | Examiner |
|---|---|---|
| The Hague | 10 December 2025 | Mao, Pauline |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

## ANNEX TO THE EUROPEAN SEARCH REPORT
## ON EUROPEAN PATENT APPLICATION NO.

EP 25 19 1202

This annex lists the patent family members relating to the patent documents cited in the above-mentioned European search report.
The members are as contained in the European Patent Office EDP file on
The European Patent Office is in no way liable for these particulars which are merely given for the purpose of information.

10-12-2025

| Patent document cited in search report | Publication date | Patent family member(s) | | Publication date |
|---|---|---|---|---|
| WO 2023021450 A1 | 23-02-2023 | EP | 4387552 A1 | 26-06-2024 |
| | | EP | 4388734 A1 | 26-06-2024 |
| | | US | 2023410445 A1 | 21-12-2023 |
| | | US | 2024377640 A1 | 14-11-2024 |
| | | US | 2024382283 A1 | 21-11-2024 |
| | | US | 2025349094 A1 | 13-11-2025 |
| | | WO | 2023021448 A1 | 23-02-2023 |
| | | WO | 2023021450 A1 | 23-02-2023 |
| | | WO | 2023021451 A1 | 23-02-2023 |

EPO FORM P0459

For more details about this annex : see Official Journal of the European Patent Office, No. 12/82